# EUROPEAN PATENT SPECIFICATION

(11) **EP 2 654 444 B1**
(45) Date of publication and mention of the grant of the patent: **06.05.2015**
(21) Application number: 11788531.9
(22) Date of filing: 30.11.2011
(51) Int. Cl.: A23D 7/00, A23D 7/01

(54) **EDIBLE FAT CONTINUOUS EMULSION COMPRISING PLANT STEROL ESTERS**
ESSBARE EMULSION MIT KONTINUIERLICHER FETTPHASE MIT PFLANZENSTEROLESTERN
ÉMULSION CONTINUE DE MATIÈRE GRASSE ALIMENTAIRE COMPRENANT DES ESTERS DE STÉROLS VÉGÉTAUX

(30) Priority: 22.12.2010 EP 10196443
(43) Date of publication of application: 30.10.2013
(73) Proprietor: Unilever N.V., 3013 AL Rotterdam (NL); Unilever PLC, London EC4Y 0DN (GB)
(72) Inventor: BONS, Johannes Robert, NL-3133AT Vlaardingen (NL); FLOETER, Eckhard, NL-3133AT Vlaardingen (NL); MEIJER, Anne Marieke, NL-3133AT Vlaardingen (NL); SMIT-KINGMA, Irene Erica, NL-3133AT Vlaardingen (NL)
(74) Representative: Wurfbain, Gilles L.
(86) International application number: PCT/EP2011/071397
(87) International publication number: WO 2012/084438

(56) References cited:
- EP-A1- 0 898 896
- WO-A1-2006/087093
- WO-A1-2008/125380
- US-A- 6 106 886
- US-A1- 2008 187 645
- US-A1- 2008 193 628

## Description

### Field of the invention

The present invention relates to a method of preparing a fat continuous emulsion comprising plant sterol esters, the fat continuous emulsion obtainable by said method and the use of pre-crystallized fat to lower the in mouth break up temperature of a fat continuous emulsion.

### Background of the invention

Edible fat continuous spreads like e.g. margarine and low fat spreads are well known food products that comprise a continuous fat phase and a dispersed aqueous phase.

Margarine is generally defined as a composition containing at least 80 wt% fat and about 20 wt% aqueous phase. In contrast, emulsions containing less than 80 wt% fat are generally called spreads. Nowadays the terms margarine and spread are often used interchangeably although in some countries the commercial use of the term margarine is subject to certain regulatory requirements. The main difference between margarine and spread is the amount of fat. Therefore, for the purpose of the present invention the terms margarine and spread will be used interchangeably.

The fat phase of margarine and similar edible fat continuous spreads comprises a mixture of liquid oil (i.e. fat that is liquid at ambient temperature) and fat which is solid at ambient temperatures. The solid fat, also called structuring fat or hardstock fat, serves to structure the fat phase by forming a fat crystal network. It also helps to stabilize the emulsion. The droplets of the aqueous phase are fixed within the spaces of the lattice of solid fat crystals. This prevents coalescence of the droplets and separation of the heavier aqueous phase from the fat phase. Structuring fat by its very nature contains a relatively high amount of saturated fatty acids (SAFA) as the SAFA is responsible for the structuring capacity of the structuring fat.

The liquid oil fraction typically comprises liquid unmodified vegetable oil such as soybean oil, sunflower oil, linseed oil, low erucic rapeseed oil (Canola), corn oil (maize oil) and blends of vegetable oils.

For an edible fat continuous spread, ideally the structuring fat has such properties that it melts or dissolves at mouth temperature. Otherwise the product may have a heavy and/or waxy mouthfeel. An important indicator is the temperature at which a spread (i.e. a water in oil emulsion) breaks up in the mouth. Preferably this 'break up temperature' is below the in-mouth temperature. Furthermore, the overall organoleptic impression should be smooth and preferable no perceivable grains should be present upon ingestion as this may result in what is generally known as a 'sandy mouthfeel'.

Other important aspects of an edible fat continuous spread are for example hardness, spreadibility, storage stability and ability to withstand temperature cycling. Temperature cycling means that the product is subjected to low and high temperatures (e.g. when the consumer takes the product out of the refrigerator and leaves it for some time at the table prior to use). This may have a negative influence on the structure of the spread (like for example destabilization of the emulsion, oil-exudation or crystal growth).

Generally, edible fat continuous food products like for example margarines and similar edible fat continuous spreads are prepared according to known processes that encompass the following steps:
1. Mixing of the liquid oil, the structuring fat and if present the aqueous phase at a temperature at which the structuring fat is definitely liquid;
2. cooling of the mixture under high shear to induce crystallization of the structuring fat to create an emulsion;
3. formation of a fat crystal network to stabilize the resulting emulsion and give the product some degree of firmness;
4. modification of the crystal network to produce the desired firmness, confer plasticity and reduce the water droplet size.

These steps are usually conducted in a process that involves apparatus that allow heating, cooling and mechanical working of the ingredients, such as the churn process or the votator process. The churn process and the votator process are described in the Ullmans Encyclopedia, Fifth Edition, Volume A 16, pages 156-158. The choice of fats that can practically be used as structuring agent may be limited. If the melting point of the structuring agent is too high the melting properties in the mouth are unsatisfactory. If on the other hand, the melting point is too low, the emulsion stability will be negatively affected.

Alternative processes have been described wherein the structuring fat is added as fat powder (i.e. crystallized fat or fat crystals) thereby eliminating the need to heat the whole composition to above the melting temperature of the structuring fat.

EP 1285584 A2 discloses a method to prepare a margarine encompassing taking the solid fat component, together with a minimal amount of the oil phase, cryogenically recrystallizing it and then combining it with an emulsion of the aqueous phase dispersed in the remainder of the oil phase or by adding the oil and aqueous phases sequentially.

Food Ingredients and Analysis International Vol. 23 No. 4 pages 29-30 (2001) describes powdered fats based on cryogenic technology that can be used for example in pourable margarines and different types of soft fat spreads. It is however mentioned that powdered fats may be used in combination with liquid oil, but for optimal performance these products need a specially designed fat composition which is crystallized from the melt. This will give the best structure of the crystal fraction, and allows a stabilizing network of crystals to be formed during cooling.

EP 1651338 A1 discloses a process for the preparation of an edible dispersion like for example margarine, wherein the dispersion is formed by mixing oil, solid structuring agent particles and an aqueous phase and/or solid phase. The solid structuring agent particles have a microporous structure of submicron size particles. The solid structuring agent particles can be prepared using a micronisation process.

From a nutritional point of view it is desirable to keep the SAFA level as low as possible as (high levels of consumption of) SAFA increases the risk of Coronary Heart Disease. Furthermore, as fat tends to have a greater energy density (energy per gram) than carbohydrates and proteins it may also be desirable to keep the overall fat level of a food product as low as possible. It is not always possible to lower the amount of SAFA and/or overall fat level in an edible fat continuous spread as this may influence the ease of processing, the organoleptic properties and/or the ease of incorporation of health actives like e.g. plant sterol.

Plant sterols are well known cholesterol lowering agents. The benefit of these ingredients to reduce the risk to cardiovascular diseases has been established for years. Where these active ingredients were initially available in the form of capsules and other pharmaceutical preparations only, over the years they have also become available in food products. The incorporation of these active ingredients in food products that are consumed daily enables the easy and reliable intake of these ingredients for many people.

Plant sterols can be classified in three groups, 4-desmethylsterols, 4-monomethylsterols and 4,4'-dimethylsterols. In oils they mainly exist as free sterols and sterol esters of fatty acids although sterol glucosides and acylated sterol glucosides are also present. There are three major phytosterols namely beta-sitosterol, stigmasterol and campesterol. Schematic drawings of the components meant are as given in "Influence of Processing on Sterols of Edible Vegetable Oils", S.P. Kochhar; Prog. Lipid Res. 22: pp. 161-188.
The respective 5 alpha- saturated derivatives such as sitostanol, campestanol and ergostanol and their derivatives are referred to as plant stanol. For the purpose of the present invention the term 'plant sterol' is defined to mean plant sterol, plant stanol and mixtures thereof.

Plant sterols and stanols as such are difficult to formulate into food products due to their poor solubility in oil and immiscibility with water which may result in food products having poor organoleptic properties, e.g. a sandy mouth feel. This made the choice of food products suitable for incorporation of plant sterols and stanols very limited. To overcome this drawback plant sterols and stanols have been modified to improve their solubility in the fat phase of food products. The most common modification of plant sterols and stanols is to their corresponding fatty acid esters (i.e. plant sterol ester and plant stanol ester). It should be noted that commercially available plant sterol esters and plant stanol esters may contain a considerable amount of non-esterified plant sterol and plant stanol as it is not always possible to achieve a degree of esterification of 100%. It may contain up to 20% non-esterified plant sterol or plant stanol, like for example up to 15%, up to 10% or up to 5%.

Commercial products such as Becel pro-activ^{tm} and Benecol^{tm} comprise sterol or stanol fatty acid esters. For the purpose of the invention the term 'plant sterol ester' is defined to mean plant sterol ester, plant stanol ester and mixtures thereof.

The incorporation of plant sterol in food products like for example fat continuous spreads remains challenging. Plant sterol esters still have a noticeable influence on the organoleptic properties of the food products they are incorporated in. This is especially the case in fat continuous spreads. For example the plant sterol esters may (negatively) influence the in-mouth melting characteristics or other important organoleptic properties of a fat continuous spread.

WO 2008/125380 discloses an edible fat continuous spread comprising from fat and plant sterol, wherein the plant sterol is present in the form of elongated crystals. Furthermore disclosed is a process for the preparation of an edible fat continuous spread comprising plant sterol, said process comprising the mixing of a first mixture comprising triglyceride oil and plant sterol present in the form of elongated crystals with a second mixture comprising one selected from the group consisting of fat phase, water phase and mixtures thereof, to provide a third mixture.

US 6106886 dliscloses a process for the preparation of stanol fatty acid esters mixtures by interesterification of stanol fatty acid esters starting material, of which at least 50% of the fatty acid groups are saturated, with fatty acid mixtures containing at least 35%, and preferably at least 45%, of poly unsaturated fatty acid (PUFA) groups, and wherein preferably the hardening of sterol fatty acid esters. The sterol fatty acid esters are preferably prepared by the esterification of phytosterols with a fatty acid ester mixture comprising at least 70% of C18 fatty acids.

EP 898896 discloses a fat based food product comprising natural fat components which have a blood cholesterol lowering effect in amounts sufficient to obtain a blood cholesterol lowering effect, wherein the fat comprises at least 1% of a sterol composition which comprises sterols of which at least 40% is esterified with fatty acid esters.

### Summary of the invention

We have found a way to incorporate plant sterol in fat continuous spreads which reduces the effect of the plant sterol on the organoleptic properties of the food product. More specifically, we have found that if the structuring fat is present as crystallized fat at the time of incorporation of the plant sterol in the form of plant sterol ester the detrimental effect of the presence of plant sterol on the temperature at which the emulsion breaks up in the mouth is reduced.

Accordingly, in a first aspect the invention provides for a method of preparing an edible fat continuous emulsion spread comprising 10 to 85 wt% of a dispersed aqueous phase and 15 to 90 wt% of a fat phase, said fat phase comprising:
- 60 to 85 wt% of a combined amount of liquid oil and structuring fat,
- 15 to 40 wt% of plant sterol esters.

Another aspect of the invention concerns an edible fat continuous emulsion spread comprising 10 to 85 wt% of a dispersed aqueous phase and 15 to 90 wt% of a fat phase, said fat phase comprising:
- 60 to 85 wt% of a combined amount of liquid oil and structuring fat,
- 15 to 40 wt% of plant sterol esters,
obtainable by the method of the present invention.

### Detailed description of the invention

Wt% is calculated on total weight of product unless specified otherwise. For the purpose of the invention ambient temperature is defined as a temperature of about 20 degrees Celsius. The terms 'oil' and 'fat' are used interchangeably unless specified otherwise and concern edible oils and fats. Where applicable the prefix 'liquid' or 'solid' is added to indicate if the fat or oil is liquid or solid at ambient temperature as understood by the person skilled in the art. The term 'structuring fat' refers to a fat that is solid at ambient temperature.

The invention thus concerns a method of preparing an edible fat continuous emulsion spread comprising 10 to 85 wt% of a dispersed aqueous phase and 15 to 90 wt% of a fat phase, said fat phase comprising:
- 60 to 85 wt% of a combined amount of liquid oil and structuring fat,
- 15 to 40 wt% of plant sterol esters,
said method comprising the steps of:
- preparing a mixture comprising at least part of the plant sterol esters and at least part of the liquid oil including subjecting the plant sterol esters to a temperature of at least the melting temperature of the plant sterol esters,
- bringing the temperature of the mixture to a temperature below the melting point of the plant sterol esters, and
- combining this mixture with at least part of the structuring fat,
wherein the structuring fat is present as fat crystals.

We have found that if the structuring fat is at least partly present as fat crystals before the plan sterol esters are combined with said structuring fat, a product is obtained with improved organoleptic characteristics. Preferably at least 80 wt% of the structuring fat is present as fat crystals, more preferably at least 90 wt%, still more preferably at least 95 wt% and even more preferably essentially all. To achieve this, the method according to the present invention includes the preparation of a mixture comprising at least part of the liquid oil and at least part of the plant sterol esters. Preferably at least 80 wt% of the plant sterol esters, more preferably at least 90 wt%, still more preferably at least 95 wt% and even more preferably essentially all. The plant sterol esters are melted before they are mixed with the liquid oil. As the plant sterol esters will be a mixture of different plant sterol esters the melting point of the plant sterol esters is defined as the lowest temperature at which the plant sterol ester mixture becomes transparent. The plant sterol esters are suitably melted by subjecting the sterol esters to a temperature of at least the melting point of the sterol esters. This can be achieved for example by melting the plant sterol esters in an oven having a temperature equal to the melting point of the plant sterols esters. Preferably the melted plant sterol esters have a transparent appearance before they are mixed with the liquid oil. The liquid oil may have a temperature equal to or above that of the melted plant sterol esters but this is not critical as long as care is taken that the plant sterol esters do not re-crystallize from the mixture before being combined with the structuring fat.

The structuring fat should be present as fat crystals before it is mixed with the plant sterol esters. Without wishing to be bound by theory it is believed that the combination of using plant sterols in the form of plant sterol esters and the step of mixing the plant sterol esters and structuring fat only when said structuring fat is present as fat crystals results in the plant sterol esters being finely divided in a thin non-continuous layer around the water droplets. In the more conventional processes the structuring fat crystallizes in the presence of or together with the plant sterol esters.

Thus, the structuring fat should be present as fat crystals. This can be achieved by any known method and includes for example the crystallization from a mixture comprising structuring fat and liquid fat. A suitable method to achieve this is the well known votator process where a mixture of liquid oil and structuring fat is brought to a temperature at which the structuring fat is melted and subsequently cooled in one or more A-units to induce crystallization.

It is also possible for example to utilize the structuring fat in the form of fat powder (i.e. pre-crystallized fat particles). When using structuring fat in the form of fat powder comprising the structuring fat, the structuring fat per se may be combined directly with the mixture comprising the plant sterol esters. It may be preferred to mix the fat powder with part of the liquid oil to make a slurry that is subsequently combined with the mixture comprising the plant sterol esters. This may provide for easier processing. It will be appreciated that the slurry should be kept at a temperature that is sufficiently low to prevent the structuring fat powder (i.e. the fat crystals) from melting.

Therefore, preferably prior to combining the structuring fat with the mixture comprising the plant sterol esters, the structuring fat is part of a mixture comprising at least part of the liquid oil and optionally at least part of the aqueous phase.

Care should be taken that the mixture comprising the plant sterol esters has a temperature that will not result in the melting of the fat crystals as this may prevent the formation of a fat crystal network or result in the re-crystallization of the melted structuring fat in the presence of the plant sterol esters (detrimentally affecting the organoleptic characteristics of the end product).

Preferably at least part of the structuring fat crystals is part of a fat crystal network when combining the structuring fat with the mixture comprising the plant sterol esters. This will be achieved for example when the fat crystals are prepared from a mixture comprising liquid oil and melted structuring fat or when fat powder is mixed with liquid oil prior to being combined with the plant sterol.

Preferably the structuring fat crystals are prepared from a mixture comprising the structuring fat, liquid oil and optionally the aqueous phase. Employing for example the well-known votator process suitably does this. In said votator process, usually a pre emulsion is prepared comprising liquid oil, structuring fat and aqueous phase at a temperature at which the structuring fat is definitely liquid. The pre emulsion is then processed in one or more A-units to induce crystallization resulting in a water in oil emulsion. According to the present invention said water in oil emulsion can then be combined, employing for example a C-unit, with the mixture comprising the plant sterol esters to obtain an edible fat continuous emulsion spread. Therefore, preferably the mixture comprising the structuring fat and liquid oil further comprises an aqueous phase wherein said mixture is a water in oil emulsion.

It may be preferred in some cases to use fat powder comprising the structuring fat as this does not require the need to form the crystal network by heating and cooling the complete pre-emulsion as in for example the votator process. Such processes have been described previously in for example EP1865786 A. This process is characterized in that (part of) the structuring fat is pre-crystallized and does not crystallize from the fat phase (comprising structuring fat and liquid oil) optionally including the aqueous phase as is the case in conventional ways of preparing a spread. One of the main advantages of this process is that requires less energy. Therefore, preferably the structuring fat is employed as pre-crystallized fat.

Suitable methods to prepare the fat powder include for example Super Critical Met Micronisation (ScMM), also known as particles from gas saturated solutions (PGSS). This is a commonly known method and is for example described in J. of Supercritical Fluids 43 (2007) 181-190 and EP1651338. Preferably, the method according to the present invention employs the structuring fat as pre-crystallized fat wherein the pre-crystallized fat is prepared by supercritical melt micronisation.

It is important that the fat powder is not subjected to storage temperatures at which the structuring fat melts as this severely reduces the ability to structure. This temperature depends on the structuring fat as used and can routinely be determined for example based on the solid fat content profile (i.e. N-lines) of the structuring fat. Preferably the fat powder, after production, has not been subjected to temperatures above 25 degrees Celsius, more preferably 15, even more preferably 10 and most preferably 5.

The edible fat continuous emulsion spread prepared according to the method of the present invention comprises 10 to 85 wt% of a dispersed aqueous phase and 15 to 90 wt% of a fat phase.

Preferably the fat continuous emulsion spread comprises 20 to 80 wt% of the aqueous phase and 20 to 80 wt% of the fat phase, more preferably 30 to 75 wt% of the aqueous phase and 25 to 70 wt% of the fat phase and even more preferably 40 to 70 wt% of the aqueous phase and 30 to 60 wt% of the fat phase.

Smaller water droplet sizes are preferred as this leads to increased microbiological stability and/or aid the firmness of the water in oil emulsion. Therefore, the water droplets preferably have a water droplet size of less than 15 micrometer, more preferably of less then 10 micrometer and even more preferably of less than 5 micrometer.

The aqueous phase may suitably contain a variety of food grade ingredients, such as emulsifiers, sodium chloride, acidulant, preservative, water-soluble flavoring, protein, polysaccharides, minerals, water-soluble vitamins. Sodium chloride is typically contained in the aqueous phase in a concentration of 0 to 2.0 wt%.

The plant sterols are used as plant sterol esters as the combination of the use of this modification of the plant sterols and the step of combining the plant sterol esters with the structuring fat only when the structuring fat is present as fat crystals provides fat continuous spreads with attractive organoleptic properties.

For the purpose of this invention the term "plant sterol esters" is defined as plant sterol esters, plant stanol esters or combinations thereof. Therefore, the plant sterol esters employed are selected from plant sterol esters, plant stanol esters and combinations thereof. It may comprise up to 20 wt% (calculated on total amount of esterified and non-esterified plant sterol) of non-esterified plant sterol, preferably less than 15 wt% even more preferably less than 10 wt% and still more preferably less than 5 wt%.

The fat phase of the fat continuous emulsion spread comprises 15 to 40 wt% (calculated on fat phase) of plant sterols esters, like for example 20 to 35 wt% and 25 to 30 wt%.

The method of the invention is especially beneficial for low fat spreads wherein the amount of plant sterol esters is at least 20 wt% calculated on the amount of fat phase. Therefore, preferably the fat continuous emulsion spread comprises 25 to 40 wt% of fat phase having an amount of 20 to 40 wt% (calculated on total fat phase) of plant sterol esters.

Preferably, the plant sterol esters represent at least 7 wt% and more preferably at least 9 wt% of the fat continuous emulsion. Typically, the plant sterol ester will be applied in a concentration that does not exceed 30 wt% (calculated on total product), preferably does not exceed 20 wt%.

Advantageously, at least 25 wt% of the fatty acids contained in the plant sterol esters are unsaturated fatty acids. Even more preferably, at least 25 wt.% of the fatty acids contained in the plant sterol esters are polyunsaturated fatty acids.

It is further preferred to employ plant sterol esters having a low melting point, for example a melting point of less than 70 degrees Celsius, preferably of less than 60 degrees Celsius and more preferably of less than 50 degrees Celsius.

The fat phase of the fat continuous emulsion spread comprises a combined amount of liquid oil and structuring fat of 60 to 85 wt% (calculated on fat phase), like for example 65 to 80 wt% or 70 to 75 wt%.

The oil or fat may be a natural (i.e. not modified) or a modified fat or oil to enhance its physical properties. Suitable methods include interesterification and hydrogenation. Examples of hydrogenated fats employed in margarines are fully hydrogenated palm oil with a slip melting point of 58 degrees Celsius and fully hydrogenated rapeseed oil with a slip melting point of 70 degrees Celsius.

Trans unsaturated fatty acids are known to have a good structuring capacity but are not preferred as they are associated with cardiovascular disease. Therefore, preferably the fat phase comprises less than 5 wt%, more preferably less than 3 wt% and even more preferably less than 1 wt% trans unsaturated fatty acid. Trans unsaturated fatty acids are naturally present mainly in fats of animal origin like for example butter fat and butter oil. Partial hydrogenation of liquid vegetable oils may also lead to the presence of trans unsaturated fatty acids. Therefore, the fat blend preferably does not contain partially hydrogenated fats.

To maintain a healthy profile the fat phase preferably comprises less than 30 wt% saturated fatty acids and preferably less than 25 wt%, like for example 20 to 35 wt%, 25 to 35 wt% or 25 to 30 wt%. Preferably the fat phase comprises at least 40 wt% of poly unsaturated fatty acids.

The liquid oil may be a single oil or a mixture of two or more oils. Likewise the structuring fat may be a single fat or a mixture of two or more fats. The liquid oil and structuring fat may be of vegetable, mammalian (e.g. dairy fat or butter oil) or marine (e.g. algae oil or fish oil) origin.

Preferably at least 50 wt% of the liquid oil (based on total amount of liquid oil) is of vegetable origin, more preferably at least 60 wt%, even more preferably at least 70 wt%, still more preferably at least 80 wt%, even still more preferably at least 90 wt% and even still more further preferably at least 95 wt%. Most preferably the oil essentially consists of oil of vegetable origin.

Preferably the liquid oil is selected from soybean oil, sunflower oil, rape seed (canola) oil, cotton seed oil, peanut oil, rice bran oil, safflower oil, palm olein, linseed oil, fish oil, high omega-3 oil derived from algae, corn oil (maize oil), sesame oil, palm kernel oil, coconut oil and combinations thereof. More preferably the liquid oil is selected from soybean oil, sunflower oil, rape seed oil, linseed oil, palm olein and combinations thereof.

The amount of structuring fat is suitably chosen such that the required structuring (e.g. stable emulsion) is obtained. Preferably the amount of structuring fat on total amount of product is 1 to 20 wt%, more preferably 2 to 15 wt% and even more preferably 4 to 12 wt%.

To optimize the structuring capacity and/or impression of the spread in the mouth structuring fats having a certain solid fat content are preferred. Therefore, the structuring fat as present in the edible fat powder preferably has a solid fat content N10 from 50 to 100, N20 from 26 to 95 and N35 from 5 to 60.

Preferably at least 50 wt% of the structuring fat (based on total amount of structuring fat) is of vegetable origin, more preferably at least 60 wt%, even more preferably at least 70 wt%, still more preferably at least 80 wt%, even still more preferably at least 90 wt% and even still more further preferably at least 95 wt%. Most preferably the structuring fat essentially consists of fat of vegetable origin.

Preferably the structuring fat is selected from palm fat, allan blackia, pentadesma, shea butter, coconut oil, soybean oil, rapeseed oil, dairy fat and combinations thereof. More preferably the structuring fat is selected from the group consisting of palm oil, palm kernel oil, palm oil fraction, palm kernel fraction, coconut oil, dairy fat fraction and combinations thereof. Even more preferably the structuring fat is selected from the group consisting of palm oil, palm kernel oil, palm oil fraction, palm kernel fraction, coconut oil and combinations thereof. The fat may have been subjected to chemical interesterification processes or enzymatic re-arrangement applications.

Preferably at least 50 wt% of the combined amount of liquid oil and structuring fat total fat blend is of vegetable origin, more preferably at least 60 wt%, even more preferably at least 70 wt%, still more preferably at least 80 wt%, even still more preferably at least 90 wt% and even still more further preferably at least 95 wt%. Most preferably the combined amount of liquid oil and structuring fat essentially consists of fat of vegetable origin.

Examples of suitable fat blends include fat blends comprising vegetable oil, up to 20 wt% fish oil and not more than 10 wt% dairy fat; and fat blends consisting of vegetable oil and up to 20 wt% fish oil.

Preferably, the fat continuous emulsion spread comprises poly glycerol poly ricinoleate (PGPR). This promotes the stability of the spread including spreadibility and the suppression of free water after spreading. PGPR is a relatively strong emulsifier and too much PGPR may negatively influence the organoleptic characteristics of the spread as it e.g. slows down the break up of the emulsion in the mouth. Therefore, preferably the amount of PGPR on total product is 0.05 to 1 wt%, more preferably 0.05 to 0.5 wt% and even more preferably 0.1 to 0.4 wt%.

The fat phase of the emulsion may suitably contain food ingredients such as emulsifiers, anti-oxidants (e.g. tocopherols), coloring, oil-soluble vitamins and oil-soluble flavoring.

The fat continuous spread obtainable by the method according to the present invention clearly have different organoleptic characteristics compared to fat continuous spreads identical in composition but not prepared according to the method of the present invention.

Therefore, another aspect of the invention relates to an edible fat continuous emulsion spread comprising 10 to 85 wt% of a dispersed aqueous phase and 15 to 90 wt% of a fat phase, said fat phase comprising:
- 60 to 85 wt% of a combined amount of liquid oil and structuring fat,
- 15 to 40 wt% of plant sterol esters,
obtainable by the method of the present invention.

The invention is now illustrated by the following non-limiting examples.

### Examples

### Water droplet size distribution of spreads (D3,3 measurement)

The normal terminology for Nuclear Magnetic Resonance (NMR) is used throughout this method. On the basis of this method the parameters D3,3 and exp(σ) of a lognormal water droplet size distribution can be determined. The D3,3 is the volume weighted mean droplet diameter and σ is the standard deviation of the logarithm of the droplet diameter.

The NMR signal (echo height) of the protons of the water in a water -in-oil emulsion are measured using a sequence of 4 radio frequency pulses in the presence (echo height E) and absence (echo height E*) of two magnetic field gradient pulses as a function of the gradient power. The oil protons are suppressed in the first part of the sequence by a relaxation filter. The ratio (R=E/E*) reflects the extent of restriction of the translational mobility of the water molecules in the water droplets and thereby is a measure of the water droplet size. By a mathematical procedure -which uses the log-normal droplet size distribution - the parameters of the water droplet size distribution D3,3 (volume weighed geometric mean diameter) and σ (distribution width) are calculated.

A Bruker magnet with a field of 0.47 Tesla (20 MHz proton frequency) with an air gap of 25 mm is used (NMR Spectrometer Bruker Minispec MQ20 Grad, ex Bruker Optik GmbH,DE).

### Spreadibility

Spreadibility is determined according to the following protocol.
A flexible palette knife is used to spread a small amount of the spread on to fat free paper. The spreading screen is evaluated according to standardized scaling. A score of 1 represents a homogeneous and smooth product without any defects, a 2 refers to the same product but then with small remarks as slightly inhomogeneous or some vacuoles, a 3 refers to the level where defects become almost unacceptable, like loose moisture or coarseness during spreading. A score of 4 or 5 refers to unacceptable products, where the 4 refers to a product still having some spreading properties, but an unacceptable level of defects.

### Free water

After spreading a sample of a fat spread, the stability of the emulsion after spreading is determined by using indicator paper (Wator, ref 906 10, ex Machery-Nagel, DE) which develops dark spots where free water is adsorbed.

A stable product does not release any water and the paper does not change.
Very unstable products release free water easily and this is indicated by dark spots on the paper.

A six point scale is used to quantify the quality of fat spread (DIN 10 311):
- 0 (zero) is a very stable and good product;
- 1 (one) is showing some loose moisture (one or two spots, or the paper changes a little in color as a total);
- 2 (two) as one but more pronounced;
- 3 (three) as one but to an almost unacceptable level;
- 4 (four) indicator paper is almost fully changing into a darker color;
- 5 (five) the paper changes completely and very fast into the maximum level of color intensity.
Spreads with a score of 4 or 5 are rejected for their stability. Spreads with a score of 0 or 1 show an acceptable quality with respect to free water.

### Salt release

The salt release is expressed as increasing of conductivity per degree Celsius. The salt release is measured with a conductivity meter type H14321 (HANNA) according the following protocol.

A sample hold cell type ESE4-10-50PAMA (FESTO) is filled with 1.5 gram of the sample (5 degrees Celsius). The cell is placed above a heating plate (having a temperature of 250 degrees Celsius). A glass beaker (Scott Duran) provided with magnetic stirrer [4x200mm] is filled with 150 gram water (5 degrees Celsius) and placed on a heating plate (stirring speed 600 rpm). Simultaneously the software controlled measurement is started (Raak Lab Informatics BV). When the water has reached a temperature of 20 degrees Celsius the sample is pushed out of the sample hold cell into the beaker automatically and the conductivity versus temperature will be measured every second. When the content of the beaker reaches 75 degrees Celsius the measurement is stopped. The measurement is done in duplicate. The results are incorporated in a graph of temperature versus conductivity. From this graph the temperature at which the conductivity starts to increase rapidly, indicating release of salt from the sample, is determined. The temperature at which the conductivity has increased 41 micro-s from the baseline is defined as the salt release temperature.

### SET I

Fat continuous spreads according to the invention (examples 1 to 4) and comparative examples, not according to the invention, (examples A to F) were prepared with the composition as in Table 1. All examples were prepared using a microvotator with an AAAC sequence using the settings as in Table 2.

**Table 1, Fat continuous spread composition of examples 1 to 4 and A to F (wt%)**

| FAT PHASE | Wt% |
|---|---|
| Interesterified mixture of 65% palm oil stearin (IV14) and 35% palm kernel oil # | 3.50 |
| Interesterified mixture of 40% shea stearin and 60% multi-fractionated palm oil stearin (IV14) # | 1.02 |
| Sunflower oil | 25.03 (for examples A to F 19.67 + 5.36) |
| Plant sterol ester ## (Generol® NG Deso, Cognis) | 12.50 |
| Poly glycerol poly ricinoleate | 0.1 |
| Unsaturated monoglycerides (Dimodan® UP-T/B, Danisco) | 0.27 |
| Lecithin | 0.04 |
| Beta-carotene | 0.03 |
| Flavoring | 0.01 |
| AQUEOUS PHASE | |
| Water | Balance |
| Sodium chloride | 1 |
| Tapioca starch | 3.14 |
| Gelatin | 1.57 |
| Potassium sorbate | 0.1 |
| Buttermilk powder (sweet) | 0.3 |

| | |
|---|---|
| # Structuring fat component. ## Comprises less than 5 wt% of non-esterified plant sterol | |

**Table 2, Microvotator settings for examples 1 to 4 and A to F**

| Example | A1 # (Celsius) | A2 # (Celsius) | A3 # (Celsius) | C ## (rpm) |
|---|---|---|---|---|
| 1 | 20 | 10 | 5 | 2500 |
| 2 | 20 | 10 | 5 | 2000 |
| 3 | 20 | 10 | 5 | 2500 |
| 4 | 20 | 10 | 5 | 2000 |
| A | 20 | 10 | 5 | 2000 |
| B | 20 | 10 | 5 | 2000 |
| C | 20 | 10 | 5 | 2500 |
| D | 20 | 10 | 5 | 2500 |
| E | 20 | 10 | 5 | 2000 |
| F | 20 | 10 | 5 | 2000 |

| | | | | |
|---|---|---|---|---|
| For all examples: A1 to A3 operated at 1000 rpm; volume of C was 75 ml. # Cooling temperature; ## stirring speed. | | | | |

### Examples A to C

The aqueous phase was prepared by mixing the aqueous phase ingredients and was pasteurized by heating the mixture to about 90 degrees Celsius. The pH was adjusted to a pH of 4.9 using citric acid.

The fat phase was prepared by heating all of the sunflower oil to a temperature of 65 degrees Celsius. The remaining fat phase ingredients were added and the mixture was heated in a water bath having a temperature of 65 degrees Celsius. The plant sterol esters were preheated in an oven at 65 degrees Celsius making sure the plant sterol esters were completely melted before the plant sterol esters were added to the sunflower oil.

A premix was prepared by slowly adding the fat phase to the aqueous phase making sure an oil in water emulsion was obtained. The premix was maintained at a temperature of 60 degrees Celsius. This premix (having a temperature of 60 degrees Celsius) was processed in the microvotator and the resulting fat continuous spread was stored at 5 degrees Celsius.

### Examples D to F

Similar to the preparation of examples A to C with the exception that 19.67 wt% (on total product) of the sunflower was used to prepare the fat phase that was subsequently used to prepare the premix. The premix was processed in the microvotator and the remainder of the sunflower oil (5.36 wt%, on total product) having a temperature of 20 degrees Celsius was post dosed after the third A-unit before the C-unit of the microvotator.

### Examples 1 to 4

Similar to the preparation of examples D to F with the exception that the melted plant sterol esters were not added to the fat phase but to 5.36 wt% of the sunflower oil that was subsequently post dosed having a temperature of 20 degrees after the third A-unit before the C-unit.
Examples 1 and 2 were done in duplicate (i.e. examples 3 and 4).

### Results

The water droplet size, spreadibility and free water after spreading was determined after one week storage at 5 degrees Celsius. The salt release temperature was determined after 5 to 6 weeks storage at 5 degrees Celsius. The results are summarized in Table 3.

**Table 3, results for examples 1 to 4 and A to F**

| Example | D3,3 (Esigma) (micrometer) | Spreadibility | Free water after spreading | Salt release (degrees Celsius) |
|---|---|---|---|---|
| A | 10.9 (2.6) | 1 | 0 | 38.1 |
| B | 10.7 (2.4) | 1 | 0 | 36.9 |
| C | 10.8 (2.4) | 1 | 0 | 36.5 |
| D | 11.6 (2.7) | 1 | 0 | 35.7 |
| E | 10.9 (2.6) | 1 | 0 | 35.9 |
| F | 18.0 (3.2) | 1 | 0 | 35.1 |
| 1 | 15 (2.4) | 1 | 0 | 32.7 |
| 2 | 13.5 (2.4) | 1 | 0 | 33.3 |
| 3 | 18 (2.6) | 1 | 0 | 32.4 |
| 4 | 15 (2.5) | 1 | 0 | 32.6 |

All spreads show good spreadibility and no free water after spreading. Examples 1 to 4 have a salt release temperature that is lower than for examples A to F. The salt release temperature of examples 1 to 4 is well below the in-mouth temperature and indicative for good organoleptic characteristics like melting behavior and taste impression.

### SET II

Fat continuous spreads according to the invention (examples 5 to 7) were prepared having a composition as in Table 4. The structuring fat was employed as pre-crystallized fat prepared by supercritical melt micronisation.

**Table 4, Fat continuous spread composition of examples 5 to 7 (wt%)**

| Example | 5 and 6 | 7 |
|---|---|---|
| FAT PHASE | | |
| Interesterified mixture of 65% palm oil stearin (IV14) and 35% palm kernel oil # | 4.27 | 5.27 |
| Sunflower oil | 25.66 | 24.37 |
| Plant sterol ester (Generol® NG Deso, Cognis) | 12.5 | 12.5 |
| Saturated monoglycerides (Dimodan® HP, Danisco) | - | 0.15 |
| Unsaturated monoglycerides (Dimodan® RTB, Danisco) | - | 0.15 |
| Beta-carotene. | 0.06 | 0.06 |
| Flavoring | 0.06 | 0.06 |
| AQUEOUS PHASE | | |
| Water | Balance | Balance |
| Sodium chloride | 1.00 | 1.00 |
| Waxy maize starch | 2.00 | - |
| Saturated monoglycerides (Dimodan® HP, Danisco) | 0.15 | - |
| Unsaturated monoglycerides (Dimodan® RTB, Danisco) | 0.15 | - |
| Potassium sorbate | 0.13 | 0.13 |
| Buttermilk powder (sweet) | 0.15 | 0.15 |

| | | |
|---|---|---|
| # Fat powder produced by supercritical melt micronisation process as described in e.g. WO 2010/069746. | | |

Melted plant sterol esters (heated in an oven of about 60 degrees Celsius) were added to the sunflower oil, said sunflower oil having a temperature of 15 degrees Celsius and comprising the other fat phase ingredients excluding the structuring fat (i.e. fat powder). This mixture was cooled to 15 degrees Celsius. Subsequently the structuring fat (i.e. the interesterified mixture of 65% palm oil stearin (IV14) and 35% palm kernel oil) was added to the mixture of plant sterol esters and sunflower oil. The resulting mixture (i.e. fat phase) had a temperature of 16 degrees Celsius.
An aqueous phase was prepared by mixing all the aqueous phase ingredients. The resulting aqueous phase was pasteurized at 73 degrees Celsius, cooled down to 60 degrees Celsius and set to ph 4.9 using citric acid. The resulting aqueous phase was then cooled down to 12 degrees Celsius.
The fat phase was combined with the aqueous phase and mixed in a cooled pin stirrer (i.e. C-unit) (example 5: 2000 rpm; example 6: 1500 rpm and example 7: 1500 rpm).
The resulting fat continuous product exiting the mixture had a temperature of about 19 degrees Celsius. The product was packed and stored for three days at 15 degrees Celsius and subsequently at 5 degrees Celsius.

### Results

The water droplet size and spreadibility was determined after 3 days storage at 15 degrees Celsius and 4 days storage at 5 degrees Celsius. The salt release temperature of example 7 was determined after 3 months storage at 5 degrees Celsius. The results are summarized in Table 5.

**Table 5, results for examples 5 to 7**

| Example | D3,3 (Esigma) (micrometer) | Spreadibility | Salt release (degrees Celsius) |
|---|---|---|---|
| 5 | 4.75 (3.25) | 1 | nm |
| 6 | 4.46 (2.7) | 1 | nm |
| 7 | 3.5 (1.1) | 1 | 33.6 |

## Claims

1. Method of preparing an edible fat continuous emulsion spread comprising 10 to 85 wt% of a dispersed aqueous phase and 15 to 90 wt% of a fat phase, said fat phase comprising:
- 60 to 85 wt% of a combined amount of liquid oil and structuring fat,
- 15 to 40 wt% of plant sterol esters,
said method comprising the steps of:
- preparing a mixture comprising at least part of the plant sterol esters and at least part of the liquid oil, including subjecting the plant sterol esters to a temperature of at least the melting temperature of the plant sterol esters,
- bringing the temperature of the mixture to a temperature below the melting point of the plant sterol esters, and
- combining this mixture with at least part of the structuring fat,
wherein the structuring fat Is present as fat crystals.

2. Method according to claim 1 wherein at least part of the structuring fat crystals is part of a fat crystal network when combining the structuring fat with the mixture comprising the plant sterol esters.

3. Method according to claim 1 or claim 2 wherein prior to combining the structuring fat with the mixture comprising the plant sterol esters, the structuring fat is part of a mixture comprising at least part of the liquid oil and optionally at least part of the aqueous phase.

4. Method according to claim 3 wherein the structuring fat crystals are prepared from the mixture comprising the structuring fat, liquid oil and optionally the aqueous phase.

5. Method according to claim 3 or claim 4 wherein the mixture comprising the structuring fat and liquid oil further comprises an aqueous phase and wherein said mixture is a water in oil emulsion.

6. Method according to any one of claims 1 to 3 wherein the structuring fat is employed as pre-crystallized fat and preferably the pre-crystallized fat is prepared by supercritical melt micronisation.

7. Method according to any one of claims 1 to 6 wherein the fat continuous emulsion spread comprises 20 to 80 wt% of the aqueous phase and 20 to 80 wt% of the fat phase, preferably 30 to 75 wt% of the aqueous phase and 25 to 70 wt% of the fat phase and more preferably 40 to 70 wt% of the aqueous phase and 30 to 60 wt% of the fat phase.

8. Method according to any one of claims 1 to 7 wherein the plant sterol esters represent at least 7 wt% and preferably at least 9 wt% of the fat continuous emulsion spread.

9. Method according to any one claims 1 to 8 wherein the plant sterol esters have a melting point of less than 70 degrees Celsius, preferably of less than 60 degrees Celsius and more preferably of less than 50 degrees Celsius.

10. Method according to any one of claims 1 to 9 wherein the fat phase comprises less than 30 wt% saturated fatty acids and preferably less than 25 wt%.

11. Method according to any one of claims 1 to 10 wherein the fat continuous emulsion spread comprises poly glycerol poly ricinoleate, preferably the amount of PGPR on total product is 0.05 to 1 wt%, more preferably 0.05 to 0.5 wt% and even more preferably 0.1 to 0.4 wt%.

12. Edible fat continuous emulsion spread comprising 10 to 85 wt% of a dispersed aqueous phase and 15 to 90 wt% of a fat phase, said fat phase comprising:
- 60 to 85 wt% of a combined amount of liquid oil and structuring fat,
- 15 to 40 wt% of plant sterol esters,
obtainable by the method of any one of claims 6 to 11.

## Patentansprüche

1. Verfahren zum Herstellen eines Aufstrichs in Form einer essbaren Emulsion mit kontinuierlicher Fettphase, der 10 bis 85 Gew.-% einer dispersen wässrigen Phase und 15 bis 90 Gew.-% einer Fettphase aufweist, wobei die Fettphase Folgendes aufweist:
- 60 bis 85 Gew.-% flüssiges Öl und strukturbildendes Fett, und zwar als Summe der Mengen,
- 15 bis 40 Gew.-% pflanzliche Sterolester,
wobei das Verfahren die folgenden Schritte aufweist:
- Herstellen eines Gemischs, das zumindest einen Teil der pflanzlichen Sterolester und zumindest einen Teil des flüssigen Öls aufweist, wozu das Unterziehen der pflanzlichen Sterolester einer Temperatur von zumindest der Schmelztemperatur der pflanzlichen Sterolester gehört,
- Bringen der Temperatur des Gemischs auf einen Wert unterhalb des Schmelzpunktes der pflanzlichen Sterolester und
- Kombinieren dieses Gemischs mit zumindest einem Teil des strukturbildenden Fetts,
wobei das strukturbildende Fett als Fettkristalle vorliegt.

2. Verfahren nach Anspruch 1,
wobei zumindest ein Teil der Kristalle des strukturbildenden Fetts Teil eines Fettkristallnetzwerkes ist, wenn das strukturbildende Fett mit dem Gemisch kombiniert wird, das pflanzliche Sterolester aufweist.

3. Verfahren nach Anspruch 1 oder Anspruch 2,
wobei vor dem Kombinieren des strukturbildenden Fetts mit dem Gemisch, das pflanzliche Sterolester aufweist, das strukturbildende Fettteil eines Gemischs ist, das zumindest einen Teil des flüssigen Öls und gegebenenfalls zumindest einen Teil der wässrigen Phase aufweist.

4. Verfahren nach Anspruch 3,
wobei die Kristalle des strukturbildenden Fetts aus dem Gemisch hergestellt werden, das strukturbildendes Fett, flüssiges Öl und gegebenenfalls die wässrige Phase aufweist.

5. Verfahren nach Anspruch 3 oder 4,
wobei das Gemisch, das das strukturbildende Fett und flüssiges Öl aufweist, ferner eine wässrige Phase aufweist und wobei das Gemisch eine Wasser-in-Öl-Emulsion ist.

6. Verfahren nach einem der Ansprüche 1 bis 3,
wobei das strukturbildende Fett als vorkristallisiertes Fett verwendet wird und das vorkristallisierte Fett vorzugsweise durch Feinstzerkleinern einer superkritischen Schmelze erzeugt wird.

7. Verfahren nach einem der Ansprüche 1 bis 6,
wobei der Aufstrich in Form einer Emulsion mit kontinuierlicher Fettphase 20 bis 80 Gew.-% der wässrigen Phase und 20 bis 80 Gew.-% der Fettphase, vorzugsweise 30 bis 75 Gew.-% der wässrigen Phase und 25 bis 70 Gew.-% der Fettphase und stärker bevorzugt 40 bis 70 Gew.-% der wässrigen Phase und 30 bis 60 Gew.-% der Fettphase aufweist.

8. Verfahren nach einem der Ansprüche 1 bis 7,
wobei die pflanzlichen Sterolester mindestens 7 Gew.-% und vorzugsweise mindestens 9 Gew.-% des Aufstrichs in Form einer Emulsion mit kontinuierlicher Fettphase ausmachen.

9. Verfahren nach einem der Ansprüche 1 bis 8,
wobei die pflanzlichen Sterolester einen Schmelzpunkt von weniger als 70 °C, vorzugsweise von weniger als 60 °C und stärker bevorzugt von weniger als 50 °C aufweisen.

10. Verfahren nach einem der Ansprüche 1 bis 9,
wobei die Fettphase weniger als 30 Gew.-% und vorzugsweise weniger als 25 Gew.-% gesättigte Fettsäuren aufweist.

11. Verfahren nach einem der Ansprüche 1 bis 10,
wobei der Aufstrich in Form einer Emulsion mit kontinuierlicher Fettphase Polyglycerolpolyricinoleat aufweist, wobei die Menge an PGPR, auf das gesamte Produkt bezogen, vorzugsweise 0,05 bis 1 Gew.-%, stärker bevorzugt 0,05 bis 0,5 Gew.-% und noch stärker bevorzugt 0,1 bis 0,4 Gew.-% beträgt.

12. Aufstrich in Form einer essbaren Emulsion mit kontinuierlicher Fettphase, der 10 bis 85 Gew.-% einer dispersen wässrigen Phase und 15 bis 90 Gew.-% einer Fettphase aufweist, wobei die Fettphase Folgendes aufweist:
- 60 bis 85 Gew.-% flüssiges Öl und strukturbildendes Fett, und zwar als Summe der Mengen,
- 15 bis 40 Gew.-% pflanzliche Sterolester,
der nach dem Verfahren nach einem der Ansprüche 6 bis 11 erhalten werden kann.

## Revendications

1. Procédé de préparation d'une pâte à tartiner d'émulsion continue de graisse comestible comprenant de 10 à 85 % en poids d'une phase aqueuse dispersée et de 15 à 90 % en poids d'une phase de graisse, ladite phase de graisse comprenant :
- de 60 à 85 % en poids d'une quantité combinée d'huile liquide et de graisse structurante,
- de 15 à 40 % en poids d'esters de stérol végétaux,
ledit procédé comprenant les étapes :
- de préparation d'un mélange comprenant au moins une partie des esters de stérol végétaux et au moins une partie de l'huile liquide, comprenant l'exposition des esters de stérol végétaux à une température d'au moins la température de fusion des esters de stérol végétaux,
- d'amenée de la température du mélange à une température inférieure au point de fusion des esters de stérol végétaux, et
- de combinaison de ce mélange avec au moins une partie de la graisse structurante,
dans lequel la graisse structurante est présente comme cristaux de graisse.

2. Procédé selon la revendication 1, dans lequel au moins une partie des cristaux de graisse structurante est une partie d'un réseau cristallin de graisse lors de la combinaison de la graisse structurante avec le mélange comprenant les esters de stérol végétaux.

3. Procédé selon la revendication 1 ou la revendication 2, dans lequel avant la combinaison de la graisse structurante avec le mélange comprenant les esters de stérol végétaux, la graisse structurante est une partie d'un mélange comprenant au moins une partie de l'huile liquide et éventuellement au moins une partie de la phase aqueuse.

4. Procédé selon la revendication 3, dans lequel les cristaux de graisse structurante sont préparés à partir du mélange comprenant la graisse structurante, l'huile liquide et éventuellement la phase aqueuse.

5. Procédé selon la revendication 3 ou la revendication 4, dans lequel le mélange comprenant la graisse structurante et l'huile liquide comprend de plus une phase aqueuse et dans lequel ledit mélange est une émulsion eau-dans-huile.

6. Procédé selon l'une quelconque des revendications 1 à 3, dans lequel la graisse structurante est utilisée comme graisse pré-cristallisée et la graisse pré-cristallisée est de préférence préparée par micronisation à l'état de fusion supercritique.

7. Procédé selon l'une quelconque des revendications 1 à 6, dans lequel la pâte à tartiner d'émulsion continue de graisse comprend de 20 à 80 % en poids de la phase aqueuse et de 20 à 80 % en poids de la phase de graisse, de préférence de 30 à 75 % en poids de la phase aqueuse et de 25 à 70 % en poids de la phase de graisse et encore mieux de 40 à 70 % en poids de la phase aqueuse et de 30 à 60 % en poids de la phase de graisse.

8. Procédé selon l'une quelconque des revendications 1 à 7, dans lequel les esters de stérol végétaux représentent au moins 7 % en poids et de préférence au moins 9 % en poids de la pâte à tartiner d'émulsion continue de graisse.

9. Procédé selon l'une quelconque des revendications 1 à 8, dans lequel les esters de stérol végétaux présentent un point de fusion inférieur à 70 degrés Celsius, de préférence inférieur à 60 degrés Celsius et encore mieux inférieur à 50 degrés Celsius.

10. Procédé selon l'une quelconque des revendications 1 à 9, dans lequel la phase de graisse comprend moins de 30 % en poids d'acides gras saturés et de préférence moins de 25 % en poids.

11. Procédé selon l'une quelconque des revendications 1 à 10, dans lequel la pâte à tartiner d'émulsion continue de graisse comprend du polyricinoléate de polyglycérol, la quantité de PGPR par rapport au produit total est de préférence de 0,05 à 1 % en poids, encore mieux de 0,05 à 0,5 % en poids et bien mieux encore de 0,1 à 0,4 % en poids.

12. Pâte à tartiner d'émulsion continue de graisse comestible comprenant de 10 à 85 % en poids d'une phase aqueuse dispersée et de 15 à 90 % en poids d'une phase de graisse, ladite phase de graisse comprenant :
- de 60 à 85 % en poids d'une quantité combinée d'huile liquide et de graisse structurante,
- de 15 à 40 % en poids d'esters de stérol végétaux,
pouvant être obtenue par le procédé selon l'une quelconque des revendications 6 à 11.
